# EUROPEAN PATENT APPLICATION

(11) **EP 4 040 893 A1**
(43) Date of publication of application: **10.08.2022**
(21) Application number: 20883252.7
(22) Date of filing: 04.09.2020
(51) Int. Cl.: H04W 72/04

(54) **COMMUNICATION METHOD AND COMMUNICATION APPARATUS**

(30) Priority: 29.10.2019 CN 201911040299
(71) Applicant: Huawei Technologies Co., Ltd., Longgang District, Shenzhen, Guangdong 518129 (CN)
(72) Inventor: CHEN, Xuehai, Shenzhen, Guangdong 518129 (CN); WANG, Daowei, Shenzhen, Guangdong 518129 (CN)
(74) Representative: Pfenning, Meinig & Partner mbB
(86) International application number: PCT/CN2020/113365
(87) International publication number: WO 2021/082732

(57) **Abstract**

Embodiments of this application disclose a communication method, and the communication method may be applied to a base station. The method in the embodiments of this application includes: obtaining first information; and switching from a narrow beam state to a wide beam state if the first information satisfies a first switching condition, where the narrow beam state indicates that a message is sent by sweeping a target area by using N narrow beams, N is an integer greater than 0, the wide beam state indicates that a message is sent by sweeping the target area by using M wide beams, and M is an integer greater than 0. The base station in the embodiments of this application can reduce duration for transmitting beams, thereby improving a symbol power saving gain of the base station.

## Description

This application claims priority to Chinese Patent Application No. 201911040299.2, filed with the China National Intellectual Property Administration on October 29, 2019 and entitled "BEAM SWITCHING METHOD AND BEAM SWITCHING APPARATUS", which is incorporated herein by reference in its entirety.

### TECHNICAL FIELD

Embodiments of this application relate to the communication field, and in particular, to a communication method and a communication apparatus.

### BACKGROUND

With the popularization of networks, power consumption of network hardware facilities increases greatly. Operators are facing pressure of greatly increasing electricity fees.

To reduce the pressure, a symbol power saving-based energy saving method is used in a base station. To be specific, when detecting a symbol without data in time domain, the base station cuts off power of an amplifier and related hardware, to reduce static power consumption of the hardware. An energy saving gain of the symbol power saving depends on cutoff duration of the amplifier and the related hardware, namely, a ratio of symbols without data to all symbols.

In current technologies, the base station may periodically transmit a plurality of beams to sweep an area, to transmit a common message in the area. A moment at which the base station transmits a beam is a symbol with data in time domain. A moment at which the base station does not transmit a beam is a symbol without data in time domain.

Because sweeping performed by using narrow beams takes longer time than sweeping performed by using wide beams, if the base station always stays in a narrow beam state, the energy saving gain of the symbol power saving is low.

### SUMMARY

Embodiments of this application provide a communication method and a communication apparatus, to improve a symbol power saving gain of a base station.

A first aspect of the embodiments of this application provides a communication method, including the following steps:
To detect a running status of a base station, the base station may collect a lot of information, including first information that may reflect a load condition of the base station. After the base station obtains the first information, the base station switches from a narrow beam state to a wide beam state if the first information satisfies a first switching condition. The narrow beam state indicates that the base station periodically sends a common message by sweeping a target area by using N narrow beams, N is an integer greater than 0, the wide beam state indicates that the base station periodically sends a common message by sweeping the target area by using M wide beams, and M is an integer greater than 0.

In this embodiment of this application, when the first information satisfies the first switching condition, the base station switches from the narrow beam state to the wide beam state, and base station signals can still cover the target area in the wide beam state. Because sweeping performed by using narrow beams takes shorter time than sweeping performed by using wide beams, when sweeping is performed by using wide beams, there are more symbols without data in time domain, that is, a symbol originally with data is changed to a symbol without data, thereby increasing cutoff duration of power of related hardware cut off by the base station and improving a symbol power saving gain of the base station.

Based on the first aspect of the embodiments of this application, in a first implementation of the first aspect of the embodiments of this application, the first information is a first physical resource block (physical resource block, PRB) utilization; and the base station may preset a value of a first threshold based on an actual situation, and after the base station obtains the first threshold and the first PRB utilization, the base station determines that the first information satisfies the first switching condition when the first PRB utilization is less than or equal to the first threshold.

In this embodiment of this application, compared with another attribute such as a central processing unit (central processing unit, CPU) utilization of the base station, a PRB utilization is an attribute that can accurately reflect the load condition of the base station. Therefore, the base station may compare the first PRB utilization with the first threshold, to accurately determine an actual load condition of the base station. This reduces a probability that, when the load condition of the base station is light load or empty load, the base station still stays in the narrow beam state when the base station still determines that the first switching condition is not satisfied.

Based on the first aspect of the embodiments of this application or the first implementation of the first aspect of the embodiments of this application, in a second implementation of the first aspect of the embodiments of this application, the first information is a first quantity of radio resource control (radio resource control, RRC) online users; and the base station may preset a value of a second threshold based on an actual situation, the base station obtains the second threshold and the first quantity of RRC online users, and the base station determines that the first information satisfies the first switching condition when the first quantity of RRC online users is less than or equal to the second threshold.

In this embodiment of this application, compared with another attribute such as a CPU utilization of the base station, a quantity of RRC online users is an attribute that can accurately reflect the load condition of the base station. Therefore, the base station may compare the first quantity of RRC online users with the second threshold, to accurately determine an actual load condition of the base station. This reduces a probability that, when the load condition of the base station is light load or empty load, the base station still stays in the narrow beam state when the base station still determines that the first switching condition is not satisfied.

Based on any one of the first aspect of the embodiments of this application or the first implementation or the second implementation of the first aspect of the embodiments of this application, in a third implementation of the first aspect of the embodiments of this application, the base station obtains second information, and the base station may switch from the narrow beam state to the wide beam state only when the first information satisfies the first switching condition and the second information satisfies a second switching condition.

In this embodiment of this application, a condition for the base station to switch from the narrow beam state to the wide beam state is added, so that whether the base station switches from the narrow beam state to the wide beam state can be controlled more flexibly.

Based on any one of the first aspect of the embodiments of this application or the first implementation to the third implementation of the first aspect of the embodiments of this application, in a fourth implementation of the first aspect of the embodiments of this application, the second information is a wide beam validity time period; and the base station presets a time range as the wide beam validity time period, and the base station may determine that the second information satisfies the second switching condition only when a current moment falls within the wide beam validity time period.

In this embodiment of this application, the base station may set the time range as the wide beam validity time period. When the current moment does not fall within the wide beam validity time period, even if the first information satisfies the first switching condition, the base station does not switch from the narrow beam state to the wide beam state. Therefore, control for the base station to switch from the narrow beam state to the wide beam state in the time range is added, so that more user-friendly control can be achieved.

Based on the third implementation of the first aspect of the embodiments of this application, in a fifth implementation of the first aspect of the embodiments of this application, the base station obtains third information; and the base station may switch from the narrow beam state to the wide beam state only when the first information satisfies the first switching condition, the second information satisfies the second switching condition, and the third information satisfies a third switching condition.

In this embodiment of this application, a condition for the base station to switch from the narrow beam state to the wide beam state is added, so that whether the base station switches from the narrow beam state to the wide beam state can be controlled more flexibly.

Based on the fifth implementation of the first aspect of the embodiments of this application, in a sixth implementation of the first aspect of the embodiments of this application, the third information is a state of a wide beam-adaptive switch; and the base station presets a switch as the wide beam-adaptive switch, and the base station may determine that the third information satisfies the third switching condition only when the state of the wide beam-adaptive switch is on.

In this embodiment of this application, the base station may preset a switch as the wide beam-adaptive switch. When the state of the wide beam-adaptive switch is off, even if the first information satisfies the first switching condition and the second information satisfies the second switching condition, the base station does not switch from the narrow beam state to the wide beam state. Therefore, a user can manually control the state of the wide beam-adaptive switch to control whether the base station switches from the narrow beam state to the wide beam state, so that more user-friendly control can be achieved.

Based on the fifth implementation of the first aspect of the embodiments of this application, in a seventh implementation of the first aspect of the embodiments of this application, the base station obtains fourth information, and the base station may switch from the narrow beam state to the wide beam state only when the first information satisfies the first switching condition, the second information satisfies the second switching condition, the third information satisfies the third switching condition, and the fourth information satisfies a fourth switching condition.

In this embodiment of this application, a condition for the base station to switch from the narrow beam state to the wide beam state is added, so that whether the base station switches from the narrow beam state to the wide beam state can be controlled more flexibly.

Based on the seventh implementation of the first aspect of the embodiments of this application, in an eighth implementation of the first aspect of the embodiments of this application, the fourth information is event information, and the event information indicates whether an event of switching from the narrow beam state to the wide beam state occurs on the base station; the base station determines that the fourth information satisfies the fourth switching condition if the event does not occur; or the base station obtains target duration and interval duration if the event occurs, where the interval duration indicates duration from a last-time occurring moment of the event to a current moment; and the base station determines that the fourth information satisfies the fourth switching condition if the interval duration is longer than or equal to the target duration.

In this embodiment of this application, the target duration is a preset time length. When the interval duration is shorter than the target duration, the base station does not switch from the narrow beam state to the wide beam state. Therefore, the base station can avoid generating, in the target duration, at least two instructions for switching from the narrow beam state to the wide beam state. This avoids, to some extent, a case in which a next instruction is followed up before a previous instruction is processed.

Based on any one of the first aspect of the embodiments of this application or the first implementation to the eighth implementation of the first aspect of the embodiments of this application, in a ninth implementation of the first aspect of the embodiments of this application, the base station switches from the wide beam state to the narrow beam state if the base station satisfies a fifth switching condition.

In this embodiment of this application, the base station may switch from the wide beam state to the narrow beam state. Therefore, the base station works in the narrow beam state when the base station satisfies the fifth switching condition. A narrow beam has a better signal gain, and better satisfies a user requirement when the load condition of the base station is heavy load or full load.

Based on the ninth implementation of the first aspect of the embodiments of this application, in a tenth implementation of the first aspect of the embodiments of this application, the base station obtains a second PRB utilization and a third threshold; or the base station obtains a second quantity of RRC online users and a fourth threshold; and it is determined that the base station satisfies the fifth switching condition if any one or more of the following conditions are satisfied: the current moment does not fall within the wide beam validity time period, the state of the wide beam-adaptive switch is off, the second PRB utilization is greater than the third threshold, or the second quantity of RRC online users is greater than the fourth threshold.

In this embodiment of this application, the fifth switching condition is specifically limited. When a condition reflecting the load condition of the base station is limited, for example, the second PRB utilization is greater than the third threshold or the second quantity of RRC online users is greater than the fourth threshold, a case in which a signal gain is poor and user experience is affected because the base station still stays in the wide beam state when the load condition of the base station is heavy load or full load can be reduced. When a condition that the current moment does not fall within the wide beam validity time period is limited or a condition that the state of the wide beam-adaptive switch is off is limited, the base station may be controlled to switch from the wide beam state to the narrow beam state in a more user-friendly way.

Based on any one of the first aspect of the embodiments of this application or the first implementation to the tenth implementation of the first aspect of the embodiments of this application, in an eleventh implementation of the first aspect of the embodiments of this application, the base station sends first system message reconfiguration notification information to a terminal, where the first system message reconfiguration notification information indicates that the base station switches from the narrow beam state to the wide beam state.

In this embodiment of this application, when the base station switches from the narrow beam state to the wide beam state, the base station sends the first system message reconfiguration notification information to the terminal, to notify the terminal of the state change. In this way, the base station actively notifies the state change and the terminal does not need to actively learn of the state change.

Based on any one of the ninth implementation or the tenth implementation of the first aspect of the embodiments of this application, in a twelfth implementation of the first aspect of the embodiments of this application, the base station sends second system message reconfiguration notification information to a terminal, where the second system message reconfiguration notification information indicates that the base station switches from the wide beam state to the narrow beam state.

In this embodiment of this application, when the base station switches from the wide beam state to the narrow beam state, the base station sends the second system message reconfiguration notification information to the terminal, to notify the terminal of the state change. In this way, the base station actively notifies the state change and the terminal does not need to actively learn of the state change.

Based on any one of the first aspect of the embodiments of this application or the first implementation to the twelfth implementation of the first aspect of the embodiments of this application, in a thirteenth implementation of the first aspect of the embodiments of this application, the message is a common message, and the common message is a remaining minimum system message, other system information, or a paging message.

In this embodiment of this application, the type of the message is specifically limited to the common message, and several specific common messages are limited, thereby improving the feasibility of the solutions.

A second aspect of the embodiments of this application provides a communication apparatus, including:
an obtaining unit, configured to obtain first information; and a switching unit, configured to switch from a narrow beam state to a wide beam state if the first information satisfies a first switching condition, where the narrow beam state indicates that a common message is sent by sweeping a target area by using N narrow beams, N is an integer greater than 0, the wide beam state indicates that a common message is sent by sweeping the target area by using M wide beams, and M is an integer greater than 0.

A third aspect of the embodiments of this application provides a communication apparatus, including: at least one memory, a transceiver, at least one processor, and a bus system. The memory is configured to store programs; the processor is configured to execute the programs in the memory, for example, performing the method in the first aspect. The bus system is configured to connect the memory and the processor, so that the memory and the processor communicate with each other.

A fourth aspect of the embodiments of this application provides a computer storage medium. The computer storage medium stores instructions, and when the instructions are run on a computer, the computer is enabled to perform the method in the first aspect.

A fifth aspect of this embodiment of this application provides a computer program product, and when the computer program product runs on a computer, the computer is enabled to perform the method in the first aspect.

### BRIEF DESCRIPTION OF DRAWINGS

FIG. 1 is a schematic diagram of a network framework according to an embodiment of this application;
FIG. 2 is a schematic flowchart of a communication method according to an embodiment of this application;
FIG. 3 is a schematic structural diagram of symbol power saving duration according to an embodiment of this application;
FIG. 4A is another schematic flowchart of a communication method according to an embodiment of this application;
FIG. 4B is another schematic flowchart of a communication method according to an embodiment of this application;
FIG. 5 is a schematic diagram of a wide beam and a narrow beam according to an embodiment of this application;
FIG. 6 is a schematic structural diagram of a communication apparatus according to an embodiment of this application;
FIG. 7 is another schematic structural diagram of a communication apparatus according to an embodiment of this application; and
FIG. 8 is another schematic structural diagram of a communication apparatus according to an embodiment of this application.

### DESCRIPTION OF EMBODIMENTS

Embodiments of this application provide a communication method and a communication apparatus, to improve a symbol power saving gain of a base station.

The following describes technical solutions of this application with reference to accompanying drawings. For example, features or content marked by dashed lines in the accompanying drawings in the embodiments of this application may be understood as optional operations or optional structures of the embodiments.

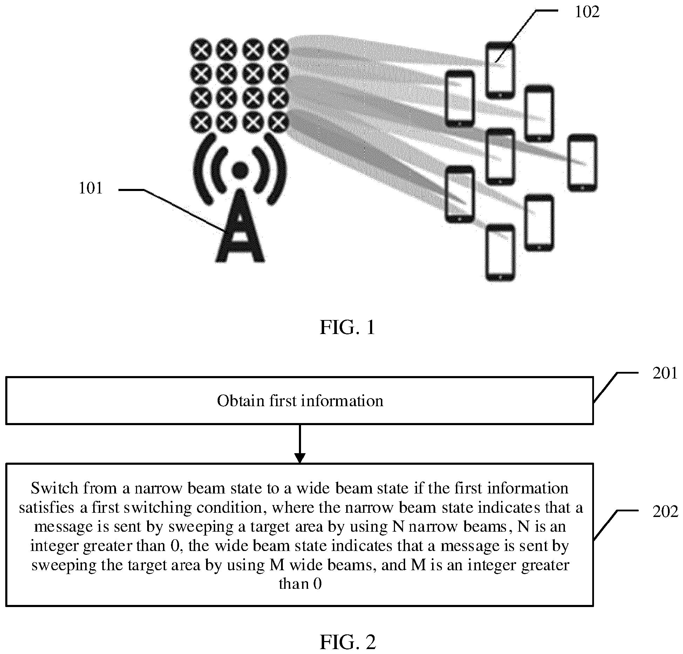

Referring to FIG. 1, a network architecture in the embodiments of this application may include:
a base station 101 and a terminal 102.

The terminal 102 is within a beam coverage area of the base station 101. The terminal 102 and the base station 101 may or may not establish a communication connection, because a common message transmitted by the base station may be sent to a terminal that has established the communication connection, or may be sent to a terminal that has not established the communication connection. This is not specifically limited herein.

In the embodiments of this application, there may be a plurality of terminals 102, or there may be one or no terminal 102. This is not specifically limited herein.

In the embodiments of this application, the terminal 102 may generally be a device having a capability of communicating with a network device, and may be, for example, an access terminal device, a user unit, a user station, a mobile station, a mobile console, a remote station, a remote terminal device, a mobile device, a user terminal device, a wireless terminal device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (a smartwatch, a smart band, or the like), smart furniture (or a household appliance), a terminal device in a future 5G network, a terminal device in a future evolved public land mobile network (public land mobile network, PLMN), a vehicle device in vehicle to everything (vehicle to everything, V2X), customer-premises equipment (customer-premises equipment, CPE), or the like. A specific implementation form of the terminal is not limited in this application.

The base station 101 in FIG. 1 may be configured to implement functions such as a radio physical entity, resource scheduling and radio resource management, radio access control, and mobility management. For example, the base station 101 may be a radio access network (radio access network, RAN) device such as a base transceiver station (base transceiver station, BTS) in a GSM system or a CDMA system, a NodeB (NodeB, NB) in a WCDMA system, an evolved NodeB (evolved NodeB, eNB) in an LTE system, a radio controller in a cloud radio access network (cloud radio access network, CRAN) scenario, a relay node station, a transmission reception point (transmission reception point, TRP), an access point, a vehicle-mounted device, a road side unit (road side unit, RSU), a wearable device, a network device such as an NR NodeB in a future 5G network, a generation NodeB (generation NodeB, gNB), a centralized unit (centralized unit, CU), a distributed unit (distributed unit, DU), or a network device in a future evolved PLMN network. A specific implementation form of the base station 101 is not limited in this application.

In the embodiments of this application, the base station 101 may transmit a beam to sweep a target area, to send a message such as a common message to the terminal 102.

In the embodiments of this application, a main function of the terminal is to receive the message such as the common message sent by the base station.

The following describes the communication method in the embodiments of this application with reference to the network architecture in FIG. 1.

Referring to FIG. 2, an embodiment of the communication method in the embodiments of this application includes the following steps.

201. A base station obtains first information.

To detect a running status of the base station, the base station may collect a lot of information, including the first information that may reflect a load condition of the base station, and the base station may obtain the first information.

202. The base station switches from a narrow beam state to a wide beam state if the first information satisfies a first switching condition.

After the base station obtains the first information, the base station switches from the narrow beam state to the wide beam state if the first information satisfies the first switching condition. The narrow beam state indicates that the base station periodically sends a message by sweeping a target area by using N narrow beams, N is an integer greater than 0, the wide beam state indicates that the base station periodically sends a message by sweeping the target area by using M wide beams, and M is an integer greater than 0.

For ease of understanding sweeping, a description is provided by using an example in which N is equal to 3 and time of one wave is equal to 1 millisecond. After the sweeping starts, the base station uses one wave to cover an area A at the first millisecond, uses one wave to cover an area B at the second millisecond, and uses one wave to sweep an area C at the third millisecond. The area A is adjacent to the area B, and the area B is adjacent to the area C. The area A, the area B, and the area C form the target area. Because the waves are not sent at the same time, the three waves occupy three milliseconds in total in time domain. Assuming that a sweeping periodicity of the base station is 10 milliseconds, no beam need to be transmitted in seven milliseconds. It should be understood that this example is merely used to illustrate a meaning of sweeping, and content in this example does not limit this embodiment. For example, the area A and the area B may not be adjacent, and the sweeping periodicity of the base station may not be 10 milliseconds.

Preferably, duration for the base station to transmit each narrow beam is equal to duration for the base station to transmit each wide beam, that is, each beam occupies same duration in time domain. In this case, to improve a symbol power saving gain of the base station, M is less than N. Assuming that the duration occupied by each beam is t and a periodicity at which the base station transmits beams is T, duration Z of symbol power saving of the base station in the narrow beam state is equal to T-N^{∗}t, and duration X of symbol power saving of the base station in the wide beam state is equal to T-M^{∗}t. Because M is less than N, X is greater than Z.

It could be understood that the duration for the base station to transmit each narrow beam may be equal to the duration for the base station to transmit each wide beam, or the duration for the base station to transmit each narrow beam may not be equal to the duration for the base station to transmit each wide beam. In actual application, one implementation may be selected. This is not specifically limited herein.

The message may be a common message. The common message is not a message sent by the base station to a specific terminal. The common message may be, for example, a remaining minimum system message (remaining minimum SI, RMSI), synchronization signal block information (synchronization signal and PBCH block, SSB), or a paging message. In actual application, the common message may alternatively be another message such as a dedicated message. This is not specifically limited herein.

In this embodiment of this application, when the first information satisfies the first switching condition, the base station switches from the narrow beam state to the wide beam state, and base station signals can still cover the target area in the wide beam state. Because sweeping performed by using narrow beams takes shorter time than sweeping performed by using wide beams, when sweeping is performed by using wide beams, more symbols without data are occupied in time domain, that is, a symbol originally with data is changed to a symbol without data, thereby increasing cutoff duration of power of related hardware cut off by the base station and improving a symbol power saving gain of the base station.

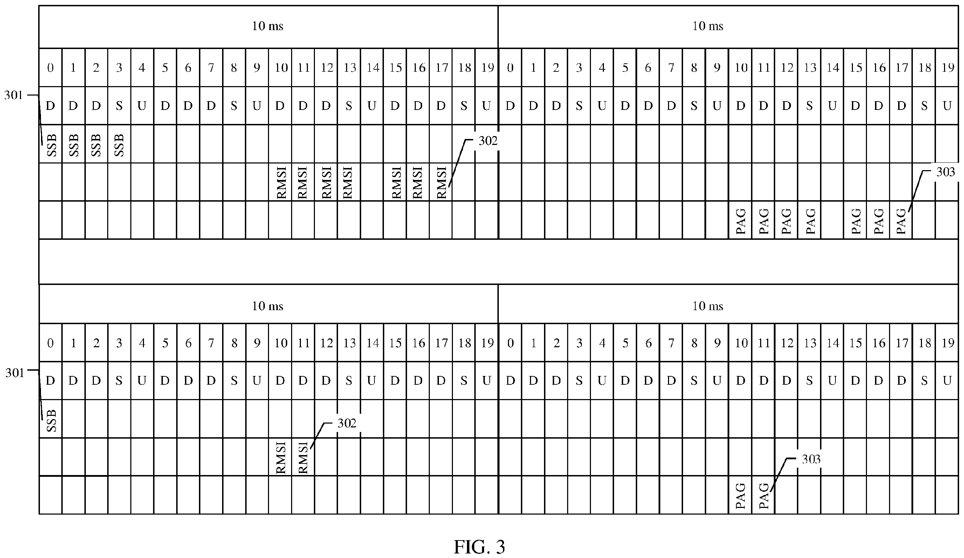

The following describes beneficial effects of this embodiment of this application with reference to FIG. 3.

Periodicity duration of the base station is 20 milliseconds. A time domain without a symbol is symbol power saving duration. A time domain with a symbol is not the symbol power saving duration.

Originally, an SSB 301 occupies four symbols, duration is two milliseconds, and symbol power saving duration is 18 milliseconds. After the communication method in the embodiments of this application is used, the SSB 301 occupies one symbol, the duration is 0.5 milliseconds, and valid symbol power saving duration is 19.5 milliseconds.

Originally, the base station sends the SSB 301 in a manner of sweeping the target area by using eight beams, each beam occupies duration of 0.5 milliseconds, and therefore, the eight beams occupy four characters and occupy duration of four milliseconds. After the communication method in the embodiments of this application is used, the base station sends the SSB 301 in a manner of sweeping the target area by using two beams, the two beams occupies one symbol, and the duration is 0.5 milliseconds. In this case, the quantity of characters is reduced by 75%, and the symbol power saving duration is increased by 8%.

Originally, an RMSI 302 occupies seven symbols, duration is 3.5 milliseconds, and symbol power saving duration is 16.5 milliseconds. After the communication method in the embodiments of this application is used, the RMSI 302 occupies two symbols, the duration is one millisecond, and valid symbol power saving duration is 19 milliseconds.

Originally, the base station sends an RMSI in a manner of sweeping the target area by using seven beams, each beam occupies duration of 0.5 milliseconds, and therefore, the seven beams occupy seven characters and occupy duration of 3.5 milliseconds. After the communication method in the embodiments of this application is used, the base station sends an RMSI in a manner of sweeping the target area by using two beams, the two beams occupy two symbols, and the duration is one millisecond. In this case, the quantity of characters is reduced by 71%, and the symbol power saving duration is increased by 15%.

PAG in FIG. 3 indicates a paging message. An original paging message 303 occupies seven symbols, duration is 3.5 milliseconds, and symbol power saving duration is 16.5 milliseconds. After the communication method in the embodiments of this application is used, the original paging message 303 occupies two symbols, the duration is one millisecond, and valid symbol power saving duration is 19 milliseconds.

Originally, the base station sends a paging message in a manner of sweeping the target area by using seven beams, each beam occupies duration of 0.5 milliseconds, and therefore, the seven beams occupy seven characters and occupy duration of 3.5 milliseconds. After the communication method in the embodiments of this application is used, the base station sends an RMSI in a manner of sweeping the target area by using two beams, the two beams occupy two symbols, and the duration is one millisecond. In this case, the quantity of characters is reduced by 71%, and the symbol power saving duration is increased by 15%.

Therefore, the communication method in the embodiments of this application can reduce the quantity of characters with data and increase the symbol power saving duration, thereby increasing cutoff duration of power of related hardware cut off by the base station and improving a symbol power saving gain of the base station.

It could be understood that the periodicity duration of the base station, namely, 20 milliseconds is merely an example for description, and the periodicity duration may be 30 milliseconds. In actual application, the periodicity duration may be other periodicity duration. This is not specifically limited herein.

It could be understood that there may be seven or eight narrow beams. In actual application, there may be another quantity such as three. This is not specifically limited herein.

It could be understood that there may be one or two wide beams. In actual application, there may be another quantity such as three. This is not specifically limited herein.

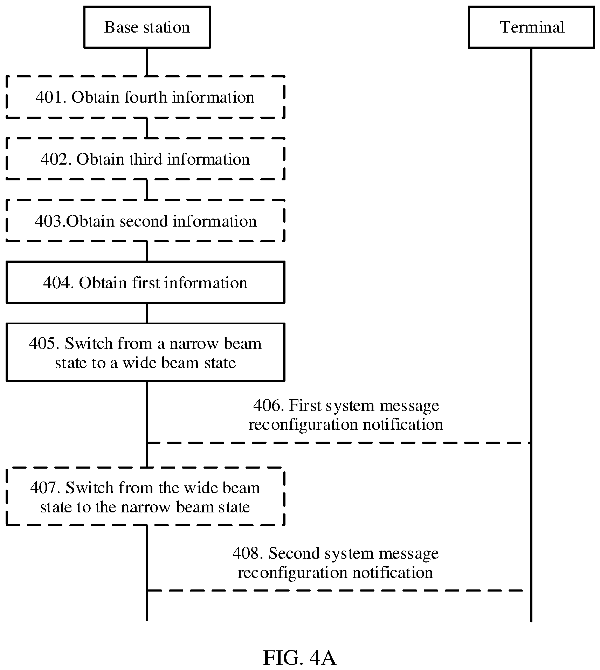

Referring to FIG. 4A, another embodiment of the communication method in the embodiments of this application includes the following steps.

401. A base station obtains fourth information.

402. The base station obtains third information.

403. The base station obtains second information.

404. The base station obtains first information.

Optionally, in this embodiment, the first information is a first PRB utilization, and the base station further obtains a first threshold. The base station determines that the first information satisfies a first switching condition if the first PRB utilization is less than or equal to the first threshold.

Optionally, in this embodiment, the first information is a first quantity of RRC online users, and the base station further obtains a second threshold. The base station determines that the first information satisfies a first switching condition if the first quantity of RRC online users is less than or equal to the second threshold.

It could be understood that, in this embodiment, the first information may be the first PRB utilization, or may be the first quantity of RRC online users. In actual application, either of the implementations may be selected. This is not specifically limited herein.

Optionally, in this embodiment, the first information is a first PRB utilization, the base station further obtains a first threshold, and the base station determines that the first information satisfies a first switching condition if the first PRB utilization is less than or equal to the first threshold. Alternatively, the first information is a first quantity of RRC online users, the base station further obtains a second threshold, and the base station determines that the first information satisfies the first switching condition if the first quantity of RRC online users is less than or equal to the second threshold. Alternatively, both a first PRB utilization and a first quantity of RRC online users are used as the first information to determine whether the first information satisfies the first switching condition, and it may be determined that the first information satisfies the first switching condition as long as one piece of the first information satisfies the first switching condition.

It could be understood that the first PRB utilization may be a downlink PRB utilization, or may be an uplink PRB utilization. This is not specifically limited herein.

It could be understood that, in this embodiment, in addition to a PRB utilization, a quantity of RRC online users may also reflect a load condition of the base station. In actual application, another attribute may reflect the load condition of the base station, for example, a CPU utilization of the base station. This is not specifically limited herein.

405. The base station switches from a narrow beam state to a wide beam state.

The base station switches from the narrow beam state to the wide beam state if the fourth information satisfies a fourth switching condition, the third information satisfies a third switching condition, the second information satisfies a second switching condition, and the first information satisfies the first switching condition. The narrow beam state indicates that the base station periodically sends a common message by sweeping a target area by using N narrow beams, N is an integer greater than 0, the wide beam state indicates that the base station periodically sends a common message by sweeping the target area by using M wide beams, and M is an integer greater than 0.

Optionally, in this embodiment, step 401 may not be performed. When step 401 is not performed, the base station may switch from the narrow beam state to the wide beam state if the third information satisfies the third switching condition, the second information satisfies the second switching condition, and the first information satisfies the first switching condition.

Optionally, in this embodiment, step 401 and step 402 may not be performed. When step 401 and step 402 are not performed, the base station may switch from the narrow beam state to the wide beam state if the second information satisfies the second switching condition, and the first information satisfies the first switching condition.

Optionally, in this embodiment, step 401, step 402, and step 403 may not be performed. When step 401, step 402, and step 403 are not performed, the base station may switch from the narrow beam state to the wide beam state if the first information satisfies the first switching condition.

It could be understood that, in this embodiment, step 401 may not be performed, or step 401 and step 402 may not be performed, or step 401, step 402, and step 403 may not be performed. In actual application, one of the implementations may be selected to enable the base station to switch from the narrow beam state to the wide beam state. This is not specifically limited herein.

The target area is an overlapping area between a first area and a second area. The first area is a sweeping area of the base station in the narrow beam state. The second area is a sweeping area of the base station in the wide beam state.

Optionally, duration for the base station to transmit each narrow beam is equal to duration for the base station to transmit each wide beam. That is, regardless of the wide beam or the narrow beam, each beam occupies same duration in time domain.

Optionally, the first area is equal to the second area. To be specific, geographical areas of the first area and the second area are close and area sizes are close. Because a quantity M of wide beams is less than a quantity N of narrow beams, to ensure that the first area is equal to the second area, a coverage area of a single wide beam needs to be larger than a coverage area of a single narrow beam.

Optionally, this embodiment may be applied to a first scenario, or may be applied to a second scenario. In the first scenario, coverage areas of X beams transmitted by the base station in a period are the same. In the second scenario, coverage areas of some beams in X beams transmitted by the base station in a period are different. X is an integer greater than 0.

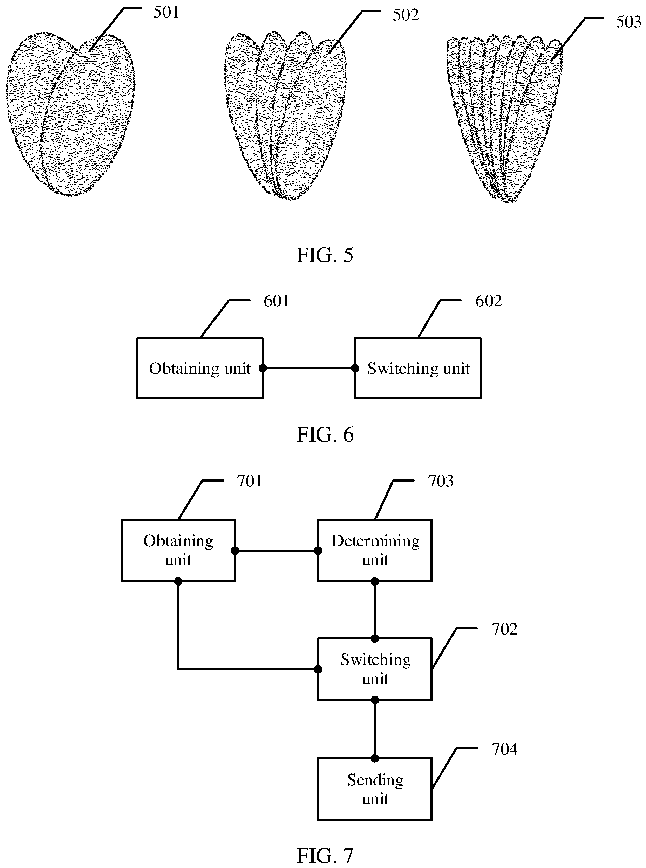

Optionally, when this embodiment is applied to the first scenario, the first area is equal to the second area, and a coverage area of each wide beam is larger than a coverage area of each narrow beam, as shown in FIG. 5. When there are only beams 501 and beams 502, the beams 501 are wide beams, and the beams 502 are narrow beams. There are two wide beams and four narrow beams, coverage areas of the wide beams are the same, coverage areas of the narrow beams are the same, and the coverage areas of the two wide beams are equal to the coverage areas of the four narrow beams. When there are only beams 502 and beams 503, the beams 502 are wide beams, and the beams 503 are narrow beams. There are four wide beams and eight narrow beams, coverage areas of the wide beams are the same, coverage areas of the narrow beams are the same, and the coverage areas of the four wide beams are equal to the coverage areas of eight narrow beams. A quantity described herein is merely an example for description. In actual application, there may be another quantity. This is not specifically limited herein.

Optionally, the second information may be a wide beam validity time period. The wide beam validity time period is a preset time range such as a range from 8:00 a.m. to 12:00 p.m. or Saturday and Sunday. The time period may be inconsecutive or irregular. This is not specifically limited herein. The base station determines that the second information satisfies the second switching condition if a current moment falls within the wide beam validity time period.

Optionally, when the second information is the wide beam validity time period, the third information may be a state of a wide beam-adaptive switch. The base station determines that the third information satisfies the third switching condition if the state of the wide beam-adaptive switch is on. The fourth information may be event information, and the event information indicates whether an event of switching from the narrow beam state to the wide beam state occurs. The base station determines that the fourth information satisfies the fourth switching condition if the event does not occur. Alternatively, the base station obtains target duration and interval duration if the event occurs. The interval duration indicates duration from a last-time occurring moment of the event to a current moment. The base station determines that the fourth information satisfies the fourth switching condition if the interval duration is longer than or equal to the target duration.

Optionally, when the second information is the wide beam validity time period, the third information may be a state of a wide beam-adaptive switch. The base station determines that the third information satisfies the third switching condition if the state of the wide beam-adaptive switch is on. The fourth information may be target event information, and the target event information indicates whether an event of switching from the narrow beam state to the wide beam state occurs within the wide beam validity time period. The base station determines that the fourth information satisfies the fourth switching condition if the event does not occur. Alternatively, the base station obtains target duration and interval duration if the event occurs. The interval duration indicates duration from a last-time occurring moment of the event in the wide beam validity time period to a current moment. The base station determines that the fourth information satisfies the fourth switching condition if the interval duration is longer than or equal to the target duration.

Optionally, when the second information is the wide beam validity time period, the third information may be event information, and the event information indicates whether an event of switching from the narrow beam state to the wide beam state occurs. The base station determines that the third information satisfies the third switching condition if the event does not occur. Alternatively, the base station obtains target duration and interval duration if the event occurs. The interval duration indicates duration from a last-time occurring moment of the event to a current moment. The base station determines that the fourth information satisfies the fourth switching condition if the interval duration is longer than or equal to the target duration. The fourth information may be a state of a wide beam-adaptive switch. The base station determines that the fourth information satisfies the fourth switching condition if the state of the wide beam-adaptive switch is on.

Optionally, when the second information is the wide beam validity time period, the third information may be target event information, and the target event information indicates whether an event of switching from the narrow beam state to the wide beam state occurs within the wide beam validity time period. The base station determines that the third information satisfies the third switching condition if the event does not occur. Alternatively, the base station obtains target duration and interval duration if the event occurs. The interval duration indicates duration from a last-time occurring moment of the event in the wide beam validity time period to a current moment. The base station determines that the third information satisfies the third switching condition if the interval duration is longer than or equal to the target duration. The fourth information may be a state of a wide beam-adaptive switch. The base station determines that the fourth information satisfies the fourth switching condition if the state of the wide beam-adaptive switch is on.

It could be understood that, when the second information is the wide beam validity time period, the third information may be the state of the wide beam-adaptive switch, and the fourth information may be the event information; the third information may be the event information, and the fourth information may be the state of the wide beam-adaptive switch; the third information may be the state of the wide beam-adaptive switch, and the fourth information may be target event information; or the third information may be target event information, and the fourth information may be the state of the wide beam-adaptive switch. In actual application, one implementation may be selected. This is not specifically limited herein.

Optionally, the second information may be a state of a wide beam-adaptive switch. The wide beam-adaptive switch is a preset switch, and the switch may be a physical switch, a virtual switch in a program, or a combination thereof. This is not specifically limited herein. The base station determines that the second information satisfies the second switching condition if the state of the wide beam-adaptive switch is on.

Optionally, when the second information is the state of the wide beam-adaptive switch, the third information may be a wide beam validity time period. The base station determines that the third information satisfies the third switching condition if a current moment falls within the wide beam validity time period. The fourth information may be event information, and the event information indicates whether an event of switching from the narrow beam state to the wide beam state occurs. The base station determines that the fourth information satisfies the fourth switching condition if the event does not occur. Alternatively, the base station obtains target duration and interval duration if the event occurs. The interval duration indicates duration from a last-time occurring moment of the event to a current moment. The base station determines that the fourth information satisfies the fourth switching condition if the interval duration is longer than or equal to the target duration.

Optionally, when the second information is the state of the wide beam-adaptive switch, the third information may be a wide beam validity time period. The base station determines that the third information satisfies the third switching condition if a current moment falls within the wide beam validity time period. The fourth information may be target event information, and the target event information indicates whether an event of switching from the narrow beam state to the wide beam state occurs within the wide beam validity time period. The base station determines that the fourth information satisfies the fourth switching condition if the event does not occur. Alternatively, the base station obtains target duration and interval duration if the event occurs. The interval duration indicates duration from a last-time occurring moment of the event in the wide beam validity time period to a current moment. The base station determines that the fourth information satisfies the fourth switching condition if the interval duration is longer than or equal to the target duration.

Optionally, when the second information is the state of the wide beam-adaptive switch, the third information may be event information, and the event information indicates whether an event of switching from the narrow beam state to the wide beam state occurs. The base station determines that the third information satisfies the third switching condition if the event does not occur. Alternatively, the base station obtains target duration and interval duration if the event occurs. The interval duration indicates duration from a last-time occurring moment of the event to a current moment. The base station determines that the fourth information satisfies the fourth switching condition if the interval duration is longer than or equal to the target duration. The fourth information may be a wide beam validity time period. The base station determines that the fourth information satisfies the fourth switching condition if the current moment falls within the wide beam validity time period.

It could be understood that, when the second information is the state of the wide beam-adaptive switch, the third information may be the wide beam validity time period, and the fourth information may be the event information; the third information may be the wide beam validity time period, and the fourth information may be the target event information; or the third information may be the event information, and the fourth information may be the wide beam validity time period. In actual application, one implementation may be selected. This is not specifically limited herein.

Optionally, the second information may be event information, and the event information indicates whether an event of switching from the narrow beam state to the wide beam state occurs. The base station determines that the second information satisfies the second switching condition if the event does not occur. Alternatively, the base station obtains target duration and interval duration if the event occurs. The interval duration indicates duration from a last-time occurring moment of the event to a current moment. The base station determines that the second information satisfies the second switching condition if the interval duration is longer than or equal to the target duration.

Optionally, when the second information is event information, the third information may be the state of the wide beam-adaptive switch. The base station determines that the third information satisfies the third switching condition if the state of wide beam-adaptive switch is on. The fourth information may be a wide beam validity time period. The base station determines that the fourth information satisfies the fourth switching condition if a current moment falls within the wide beam validity time period.

Optionally, when the second information is event information, the third information may be a wide beam validity time period. The base station determines that the third information satisfies the third switching condition if a current moment falls within the wide beam validity time period. The fourth information may be the state of the wide beam-adaptive switch. The base station determines that the fourth information satisfies the fourth switching condition if the state of wide beam-adaptive switch is on.

It could be understood that, when the second information is the event information, the third information may be the wide beam validity time period, and the fourth information may be the state of the wide beam-adaptive switch; or the third information may be the state of the wide beam-adaptive switch, and the fourth information may be the wide beam validity time period. In actual application, one implementation may be selected. This is not specifically limited herein.

406. The base station sends a first system message reconfiguration notification to a terminal.

After switching from the narrow beam state to the wide beam state, the base station may send the first system message reconfiguration notification information to the terminal. The first system message reconfiguration notification information indicates that the base station switches from the wide beam state to the narrow beam state and is used to notify the terminal that a beam state of the base station changes.

407. The base station switches from the wide beam state to the narrow beam state.

The base station switches from the wide beam state to the narrow beam state if a fifth switching condition is satisfied.

The fifth switching condition includes any one or more of the following:
the current moment does not fall within the wide beam validity time period, the state of the wide beam-adaptive switch is off, a second PRB utilization is greater than a third threshold, or a second quantity of RRC online users is greater than a fourth threshold.

408. The base station sends a second system message reconfiguration notification to a terminal.

After switching from the narrow beam state to the wide beam state, the base station may send the second system message reconfiguration notification information to the terminal. The second system message reconfiguration notification information indicates that the base station switches from the wide beam state to the narrow beam state and is used to notify the terminal that a beam state of the base station changes.

Optionally, in this embodiment, step 406 may not be performed, because even if the terminal is not notified that the beam state of the base station changes, the terminal can normally receive the common message.

It could be understood that, in this embodiment, step 406 may be performed, or may not be performed. In actual application, either of the implementations may be selected. This is not specifically limited herein.

Optionally, in this embodiment, step 407 may not be performed, because even if the base station keeps staying in the wide beam state, the base station can still send the common message to the terminal.

It could be understood that, in this embodiment, step 407 may be performed, or may not be performed. In actual application, either of the implementations may be selected. This is not specifically limited herein.

Optionally, in this embodiment, step 408 may not be performed, because even if the terminal is not notified that the beam state of the base station changes, the terminal can normally receive the common message.

It could be understood that, in this embodiment, step 408 may be performed, or may not be performed. In actual application, either of the implementations may be selected. This is not specifically limited herein.

It could be understood that in this embodiment, there is no limited time sequence relationship between step 401, step 402, step 403, and step 404. Step 401 may be performed after step 402, and step 403 may be performed after step 404. This is not specifically limited herein.

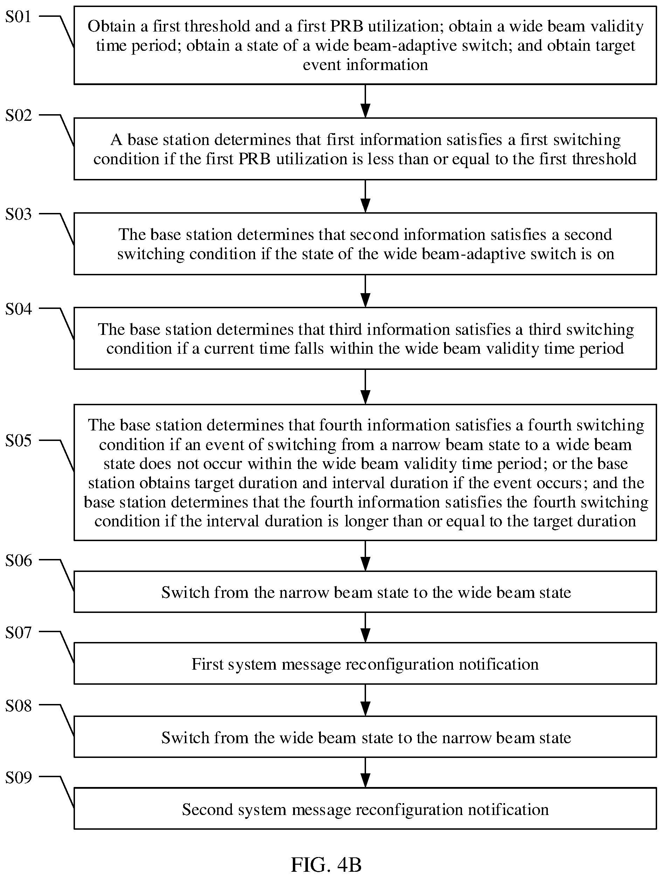

The following describes the communication method in the embodiments of this application with reference to FIG. 4B when first information is a first PRB utilization, second information is a state of a wide beam-adaptive switch, third information is a wide beam validity time period, and fourth information is target event information.

S01. A base station obtains a first threshold and the first PRB utilization, the base station obtains the wide beam validity time period, the base station obtains the state of the wide beam-adaptive switch, and the base station obtains the target event information.

The first threshold is a preset threshold, and the base station may obtain the first threshold. The wide beam validity time period is a preset time range, and the base station may obtain the wide beam validity time period. The wide beam-adaptive switch is a preset switch, and the switch may be a physical switch, or a virtual switch in a program. The base station may learn whether the state of the wide beam-adaptive switch is on or off. The target event information indicates whether an event of switching from a narrow beam state to a wide beam state occurs within the wide beam validity time period.

S02. The base station determines that the first information satisfies a first switching condition if the first PRB utilization is less than or equal to the first threshold.

The base station may learn whether the first PRB utilization is less than or equal to the first threshold based on the obtained first PRB utilization and the obtained first threshold. The base station determines that the first information satisfies the first switching condition if the first PRB utilization is less than or equal to the first threshold.

S03. The base station determines that the second information satisfies a second switching condition if the state of the wide beam-adaptive switch is on.

The base station may learn whether the state of the wide beam-adaptive switch is on or off based on the obtained state of the wide beam-adaptive switch. The base station determines that the second information satisfies the second switching condition if the state of the wide beam-adaptive switch is on.

S04. The base station determines that third information satisfies a third switching condition if a current time falls within the wide beam validity time period.

The base station may learn whether the current time falls within the wide beam validity time period based on the obtained wide beam validity time period. The base station determines that the third information satisfies the third switching condition if the current time falls within the wide beam validity time period.

S05. The base station determines that fourth information satisfies a fourth switching condition if the event of switching from the narrow beam state to the wide beam state does not occur within the wide beam validity time period; or the base station obtains target duration and interval duration if the event occurs; and the base station determines that the fourth information satisfies the fourth switching condition if the interval duration is longer than or equal to the target duration.

The base station may learn, based on the obtained target event information, whether the event of switching from the narrow beam state to the wide beam state occurs within the wide beam validity time period. The base station determines that the fourth information satisfies the fourth switching condition if the event of switching from the narrow beam state to the wide beam state does not occur within the wide beam validity time period. Alternatively, the base station obtains the target duration and the interval duration if the event occurs. The interval duration indicates duration from a last-time occurring moment of the event to a current moment. The base station may learn, based on the obtained target duration and the obtained interval duration, whether the interval duration is longer than or equal to the target duration. The base station determines that the fourth information satisfies the fourth switching condition if the interval duration is longer than or equal to the target duration.

S06. The base station switches from the narrow beam state to the wide beam state.

The base station switches from the narrow beam state to the wide beam state if the fourth information satisfies the fourth switching condition, the third information satisfies the third switching condition, the second information satisfies the second switching condition, and the first information satisfies the first switching condition.

S07. First system message reconfiguration notification.

After switching from the narrow beam state to the wide beam state, the base station may send the first system message reconfiguration notification information to a terminal. The first system message reconfiguration notification information indicates that the base station switches from the wide beam state to the narrow beam state and is used to notify the terminal that a beam state of the base station changes.

S08. The base station switches from the wide beam state to the narrow beam state.

The base station switches from the wide beam state to the narrow beam state if a fifth switching condition is satisfied. The fifth switching condition includes any one or more of the following: the current moment does not fall within the wide beam validity time period, the state of the wide beam-adaptive switch is off, a second PRB utilization is greater than a third threshold, a second quantity of RRC online users is greater than a fourth threshold. The third threshold and the fourth threshold are preset thresholds.

S09. Second system message reconfiguration notification.

After switching from the narrow beam state to the wide beam state, the base station may send the second system message reconfiguration notification information to a terminal. The second system message reconfiguration notification information indicates that the base station switches from the wide beam state to the narrow beam state and is used to notify the terminal that a beam state of the base station changes.

The foregoing describes the communication method in the embodiments of this application. The following describes the communication apparatus in the embodiments of this application. Referring to FIG. 6, an embodiment of the communication apparatus in the embodiments of this application includes:
an obtaining unit 601, configured to obtain first information; and
a switching unit 602, configured to switch from a narrow beam state to a wide beam state if the first information satisfies a first switching condition, where the narrow beam state indicates that a common message is sent by sweeping a target area by using N narrow beams, N is an integer greater than 1, the wide beam state indicates that a common message is sent by sweeping the target area by using M wide beams, and M is an integer greater than 0 and less than N.

In this embodiment, operations performed by the units of the communication apparatus are similar to those described in the embodiment shown in FIG. 2, and details are not described herein again.

In this embodiment of this application, when the first information satisfies the first switching condition, the switching unit 602 switches from the narrow beam state to the wide beam state, and base station signals can still cover the target area in the wide beam state. Because a quantity M of wide beams is less than a quantity N of narrow beams, more symbols without data are occupied in time domain, that is, a symbol originally with data is changed to a symbol without data, thereby increasing cutoff duration of power of related hardware cut off by the base station and improving a symbol power saving gain of the base station.

Referring to FIG. 7, an embodiment of the communication apparatus in the embodiments of this application includes:
an obtaining unit 701, configured to obtain first information; and
a switching unit 702, configured to switch from a narrow beam state to a wide beam state if the first information satisfies a first switching condition, where the narrow beam state indicates that a common message is sent by sweeping a target area by using N narrow beams, N is an integer greater than 0, the wide beam state indicates that a common message is sent by sweeping the target area by using M wide beams, and M is an integer greater than 0.

The communication apparatus in this embodiment further includes: a determining unit 703, configured to determine that the first information satisfies the first switching condition if the first PRB utilization is less than or equal to the first threshold. The obtaining unit 701 is further configured to obtain a first threshold. The first information includes a first physical resource block PRB utilization.

The obtaining unit 701 is further configured to obtain a second threshold. The first information includes a first quantity of radio resource control RRC online users. The determining unit 703 is further configured to determine that the first information satisfies the first switching condition if the first quantity of RRC online users is less than or equal to the second threshold.

The obtaining unit 701 is further configured to obtain second information. The switching unit 702 is specifically configured to switch from the narrow beam state to the wide beam state if the second information satisfies a second switching condition and the first information satisfies the first switching condition.

The second information is a wide beam validity time period. The determining unit 703 is further configured to determine that the second information satisfies the second switching condition if a current moment falls within the wide beam validity time period.

The obtaining unit 701 is further configured to obtain third information. The switching unit 702 is specifically configured to switch from the narrow beam state to the wide beam state if the third information satisfies a third switching condition, the second information satisfies the second switching condition, and the first information satisfies the first switching condition.

The third information is a state of a wide beam-adaptive switch. The determining unit 703 is further configured to determine that the third information satisfies the third switching condition if the state of the wide beam-adaptive switch is on.

The obtaining unit 701 is further configured to obtain fourth information. The switching unit 702 is specifically configured to switch from the narrow beam state to the wide beam state if the fourth information satisfies a fourth switching condition, the third information satisfies the third switching condition, the second information satisfies the second switching condition, and the first information satisfies the first switching condition.

The fourth information is event information, and the event information indicates whether an event of switching from the narrow beam state to the wide beam state occurs. The determining unit 703 is further configured to determine that the fourth information satisfies the fourth switching condition if the event does not occur. Alternatively, the obtaining unit 701 is further configured to obtain target duration and interval duration if the event occurs, where the interval duration indicates duration from a last-time occurring moment of the event to a current moment. The determining unit 703 is further configured to determine that the fourth information satisfies the fourth switching condition if the interval duration is longer than or equal to the target duration.

The switching unit 702 is further configured to switch from the wide beam state to the narrow beam state if a fifth switching condition is satisfied. The obtaining unit 701 is further configured to: obtain a second PRB utilization and a third threshold, or obtain a fourth threshold and a second quantity of RRC online users, where the fifth switching condition includes any one or more of the following: the current moment does not fall within the wide beam validity time period, the state of the wide beam-adaptive switch is off, the second PRB utilization is greater than the third threshold, or the second quantity of RRC online users is greater than the fourth threshold.

A sending unit 704 may be configured to send first system message reconfiguration notification information to a terminal, where the first system message reconfiguration notification information indicates that a base station switches from the narrow beam state to the wide beam state. The sending unit 704 may be further configured to send second system message reconfiguration notification information to a terminal, where the second system message reconfiguration notification information indicates that a base station switches from the wide beam state to the narrow beam state. The message is a common message, and the common message may be a remaining minimum system message, a synchronization signal block message, or a paging message.

Operations performed by the units of the communication apparatus are similar to those described in the embodiment shown in FIG. 4A or FIG. 4B, and details are not described herein again.

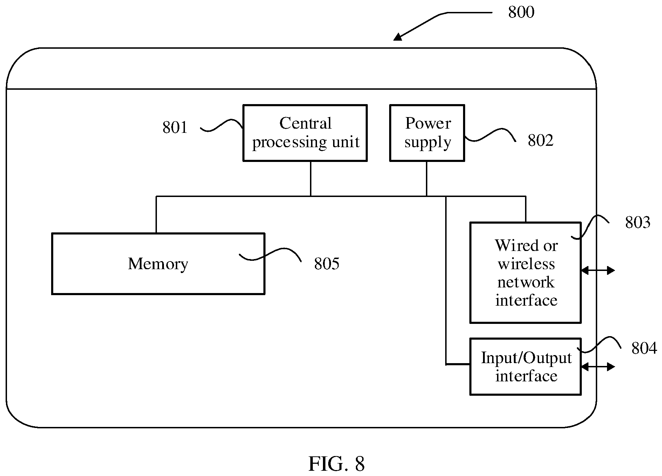

Referring to FIG. 8, another embodiment of the communication apparatus in the embodiments of this application includes:
the communication apparatus 800 may include one or more central processing units (central processing units, CPU) 801 and a memory 805, where the memory 805 stores one or more application programs or data.

The memory 805 may be a volatile memory or a persistent memory. The programs stored in the memory 805 may include one or more modules, and each module may include a series of instruction operations for a server. Further, the central processing units 801 may be configured to: communicate with the memory 805, and perform, on the communication apparatus 800, the series of instruction operations in the memory 805. When a related program instruction is executed in the at least one processing unit 801, the apparatus 800 may be enabled to implement the communication method provided in any one of the foregoing embodiments and any possible design of the communication method.

The communication apparatus 800 may further include one or more power supplies 802, one or more wired or wireless network interfaces 803, one or more input/output interfaces 804, and/or one or more operating systems such as Windows ServerTM, Mac OS XTM, UnixTM, LinuxTM, and FreeBSDTM.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a base station) to perform all or some of the steps of the methods described in the embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

## Claims

1. A communication method, comprising:
obtaining first information; and
switching from a narrow beam state to a wide beam state if the first information satisfies a first switching condition, wherein the narrow beam state indicates that a message is sent by sweeping a target area by using N narrow beams, N is an integer greater than 0, the wide beam state indicates that a message is sent by sweeping the target area by using M wide beams, and M is an integer greater than 0.

2. The method according to claim 1, wherein the method further comprises:
obtaining a first threshold, wherein
the first information comprises a first physical resource block PRB utilization; and
determining that the first information satisfies the first switching condition if the first PRB utilization is less than or equal to the first threshold.

3. The method according to claim 1, wherein the method further comprises:
obtaining a second threshold, wherein
the first information comprises a first quantity of radio resource control RRC online users; and
determining that the first information satisfies the first switching condition if the first quantity of RRC online users is less than or equal to the second threshold.

4. The method according to any one of claims 1 to 3, wherein the method further comprises:
obtaining second information; and
the switching from a narrow beam state to a wide beam state comprises:
switching from the narrow beam state to the wide beam state if the second information satisfies a second switching condition and the first information satisfies the first switching condition.

5. The method according to claim 4, wherein
the second information is a wide beam validity time period; and
the method further comprises:
determining that the second information satisfies the second switching condition if a current moment falls within the wide beam validity time period.

6. The method according to claim 4, wherein the method further comprises:
obtaining third information; and
the switching from a narrow beam state to a wide beam state comprises:
switching from the narrow beam state to the wide beam state if the third information satisfies a third switching condition, the second information satisfies the second switching condition, and the first information satisfies the first switching condition.

7. The method according to claim 6, wherein
the third information is a state of a wide beam-adaptive switch; and
the method further comprises:
determining that the third information satisfies the third switching condition if the state of the wide beam-adaptive switch is on.

8. The method according to claim 6, wherein the method further comprises:
obtaining fourth information; and
the switching from a narrow beam state to a wide beam state comprises:
switching from the narrow beam state to the wide beam state if the fourth information satisfies a fourth switching condition, the third information satisfies the third switching condition, the second information satisfies the second switching condition, and the first information satisfies the first switching condition.

9. The method according to claim 8, wherein
the fourth information is event information, and the event information indicates whether an event of switching from the narrow beam state to the wide beam state occurs;
determining that the fourth information satisfies the fourth switching condition if the event does not occur; or
obtaining target duration and interval duration if the event occurs, wherein the interval duration indicates duration from a last-time occurring moment of the event to a current moment; and
determining that the fourth information satisfies the fourth switching condition if the interval duration is longer than or equal to the target duration.

10. The method according to any one of claims 1 to 9, wherein the method further comprises:
switching from the wide beam state to the narrow beam state if a fifth switching condition is satisfied.

11. The method according to claim 10, wherein the method further comprises:
obtaining a second PRB utilization and a third threshold, or obtaining a second quantity of RRC online users and a fourth threshold, wherein
the fifth switching condition comprises any one or more of the following:
the current moment does not fall within the wide beam validity time period, the state of the wide beam-adaptive switch is off, the second PRB utilization is greater than the third threshold, or the second quantity of RRC online users is greater than the fourth threshold.

12. The method according to any one of claims 1 to 9, wherein after the switching from a narrow beam state to a wide beam state, the method further comprises:
sending first system message reconfiguration notification information to a terminal, wherein the first system message reconfiguration notification information comprises information indicating that a base station switches from the narrow beam state to the wide beam state.

13. The method according to claim 10 or 11, wherein after the switching from the wide beam state to the narrow beam state, the method further comprises:
sending second system message reconfiguration notification information to a terminal, wherein the second system message reconfiguration notification information comprises information indicating that a base station switches from the wide beam state to the narrow beam state.

14. The method according to any one of claims 1 to 13, wherein the message is a common message, and the common message is a remaining minimum system message, a synchronization signal block message, or a paging message.

15. A communication apparatus, comprising:
an obtaining unit, configured to obtain first information; and
a switching unit, configured to switch from a narrow beam state to a wide beam state if the first information satisfies a first switching condition, wherein the narrow beam state indicates that a common message is sent by sweeping a target area by using N narrow beams, N is an integer greater than 0, the wide beam state indicates that a common message is sent by sweeping the target area by using M wide beams, and M is an integer greater than 0.

16. The apparatus according to claim 15, wherein the first information comprises a first physical resource block PRB utilization;
the obtaining unit is further configured to obtain a first threshold; and
the apparatus further comprises:
a determining unit, configured to determine that the first information satisfies the first switching condition if the first PRB utilization is less than or equal to the first threshold.

17. The apparatus according to claim 15, wherein the first information comprises a first quantity of radio resource control RRC online users;
the obtaining unit is further configured to obtain a second threshold; and
the apparatus further comprises:
a determining unit, configured to determine that the first information satisfies the first switching condition if the first quantity of RRC online users is less than or equal to the second threshold.

18. The apparatus according to any one of claims 16 to 17, wherein
the obtaining unit is further configured to obtain second information; and
the switching unit is specifically configured to switch from the narrow beam state to the wide beam state if the second information satisfies a second switching condition and the first information satisfies the first switching condition.

19. The apparatus according to claim 18, wherein the second information is a wide beam validity time period; and
the apparatus further comprises:
the determining unit is configured to determine that the second information satisfies the second switching condition if a current moment falls within the wide beam validity time period.

20. The apparatus according to claim 18, wherein
the obtaining unit is further configured to obtain third information; and
the switching unit is specifically configured to switch from the narrow beam state to the wide beam state if the third information satisfies a third switching condition, the second information satisfies the second switching condition, and the first information satisfies the first switching condition.

21. The apparatus according to claim 20, wherein the third information is a state of a wide beam-adaptive switch; and
the determining unit is further configured to determine that the third information satisfies the third switching condition if the state of the wide beam-adaptive switch is on.

22. The apparatus according to claim 20, wherein
the obtaining unit is further configured to obtain fourth information; and
the switching unit is specifically configured to switch from the narrow beam state to the wide beam state if the fourth information satisfies a fourth switching condition, the third information satisfies the third switching condition, the second information satisfies the second switching condition, and the first information satisfies the first switching condition.

23. The apparatus according to claim 22, wherein the fourth information is event information, and the event information indicates whether an event of switching from the narrow beam state to the wide beam state occurs;
the determining unit is further configured to determine that the fourth information satisfies the fourth switching condition if the event does not occur; or
the obtaining unit is further configured to obtain target duration and interval duration if the event occurs, wherein the interval duration indicates duration from a last-time occurring moment of the event to a current moment; and
the determining unit is further configured to determine that the fourth information satisfies the fourth switching condition if the interval duration is longer than or equal to the target duration.

24. The apparatus according to any one of claims 15 to 23, wherein
the switching unit is further configured to switch from the wide beam state to the narrow beam state if a fifth switching condition is satisfied.

25. The apparatus according to claim 24, wherein
the obtaining unit is further configured to: obtain a second PRB utilization and a third threshold, or obtain a fourth threshold and a second quantity of RRC online users, wherein
the fifth switching condition comprises any one or more of the following: the current moment does not fall within the wide beam validity time period, the state of the wide beam-adaptive switch is off, the second PRB utilization is greater than the third threshold, or the second quantity of RRC online users is greater than the fourth threshold.

26. The apparatus according to any one of claims 15 to 23, wherein the apparatus further comprises:
a sending unit, configured to send first system message reconfiguration notification information to a terminal, wherein the first system message reconfiguration notification information indicates that a base station switches from the narrow beam state to the wide beam state.

27. The apparatus according to claim 24 or 25, wherein the apparatus further comprises:
a sending unit, configured to send second system message reconfiguration notification information to a terminal, wherein the second system message reconfiguration notification information indicates that a base station switches from the wide beam state to the narrow beam state.

28. The apparatus according to any one of claims 15 to 27, wherein the message is a common message, and the common message may be a remaining minimum system message, a synchronization signal block message, or a paging message.

29. A communication apparatus, comprising:
at least one memory and at least one processor, wherein
the memory is configured to store programs, and the processor executes the programs in the memory to implement the method according to any one of claims 1 to 14.

30. A communication system, wherein the communication system comprises one or more of the following: the communication apparatus according to claims 15 to 27 and the terminal according to claim 25 or 26.

31. A communication apparatus, wherein the apparatus is configured to perform the method according to any one of claims 1 to 14.

32. A computer storage medium, wherein the computer storage medium stores instructions, and when the instructions are run on a computer, the computer is enabled to perform the method according to any one of claims 1 to 14.

33. A computer program product, wherein when the computer program product runs on a computer, the computer is enabled to perform the method according to any one of claims 1 to 14.
